# EUROPÄISCHE PATENTANMELDUNG

(11) **EP 2 821 186 A2**
(43) Veröffentlichungstag der Anmeldung: **07.01.2015**
(21) Anmeldenummer: 14172478.1
(22) Anmeldetag: 16.06.2014
(51) Int. Cl.: B25J 9/00

(54) **Vorrichtung zum Umgang mit Artikeln**

(30) Priorität: 04.07.2013 DE 102013213057
(71) Anmelder: Krones Aktiengesellschaft, 93073 Neutraubling (DE)
(72) Erfinder: Unterseher, Josef, 93073 Neutraubling (DE)
(74) Vertreter: Benninger, Johannes

(57) **Zusammenfassung**

Es wird eine Vorrichtung (01) zum Umgang mit Artikeln beschrieben. Die Vorrichtung (01) umfasst eine Basis (04) sowie ein Gestänge (05) bestehend aus mindestens drei angetriebenen Armen (50) und einem zentralen Koppelelement (06). Jeder der angetriebenen Arme (50) besteht aus einem um eine eigene, an der Basis (04) angeordnete Schwenkachse (51) drehbar angetrieben gelagerten Oberarm (52) und einem an dem Oberarm (52) gelenkig angeordneten und mit dem Koppelement (06) gelenkig verbundenen Unterarm (53). Ferner verfügt jeder der angetriebenen Arme über einen eigenen Schwenkantrieb (54) zum individuellen Verschwenken des Oberarms (52) um dessen Schwenkachse (51). Die Vorrichtung (01) umfasst darüber hinaus mindestens einen eine Wellenleistung von der Basis (04) zum Koppelelement (06) übertragenden Antrieb (02). Der Antrieb (02) erzeugt basisseitig Drehbewegungen und überträgt diese entlang wenigstens eines Arms (50) der Vorrichtung (01) von der Basis (04) zum Koppelelement (06).

## Beschreibung

Die vorliegende Erfindung betrifft eine Vorrichtung zum Umgang mit Artikeln gemäß den Merkmalen des Oberbegriffs des Anspruchs 1.

Der Umgang mit Artikeln kann eine Manipulation eines oder mehrerer Artikel und/oder ein unter dem Begriff Verbringung zusammengefasstes Verschieben und/oder Anheben und/oder Drehen um eine oder mehrere Achsen und/oder Versetzen von Artikeln auf einer Fläche oder auch von einer ersten Fläche auf eine zweite Fläche und/oder die Behandlung eines oder mehrerer Artikel, beispielsweise das Versehen eines oder mehrerer Artikel mittels einer Umreifung, einer Umverpackung, wie etwa einer Umwickelung, einem Schrumpfschlauch oder eines Kartons vorsehen oder umfassen, um nur einige denkbare Ausgestaltungen anzuführen.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Auch kann der Umgang mit Artikeln einen gleichzeitigen Umgang mit mehreren, beispielsweise relativ zueinander gruppierten Artikeln und/oder das Gruppieren von Artikeln, bei dem mehrere Artikel in einer gewünschten Ausrichtung relativ zueinander angeordnet werden, vorsehen.

Zum Umgang mit einem oder mehreren Artikeln ist bekannt, mindestens einen Manipulator zu verwenden, beispielsweise ein Werkzeug, wie etwa ein Greifer oder eine Anlagefläche, welcher Manipulator mit Hilfe einer Vorrichtung zum Umgang mit Artikeln innerhalb eines Arbeitsraums positioniert und beispielsweise entsprechend einer zur Ausführung einer Manipulation und/oder einer Verbringung und/oder einer Behandlung eines oder mehrerer Artikel erforderlichen Bewegung bewegt werden kann. Die Bewegung, die dabei vermittels einer Vorrichtung zum Umgang mit Artikeln ausgeführt wird, kann wie im Fall einer Drehung um eine oder mehrere Achsen eine punktförmige, oder im Fall einer Translationsbewegung eine geradlinige oder zwei- oder dreidimensional gekrümmt verlaufende Bewegungsbahn vorsehen. Auch beispielsweise abschnittsweise Kombinationen hieraus sind möglich.

Der Manipulator kann Teil einer genannten Vorrichtung zum Umgang mit Artikeln sein, diese umfassen oder von dieser umfasst sein. Der Manipulator kann am Ort innerhalb eines Arbeitsraums, an den er mit Hilfe der Vorrichtung zum Umgang mit Artikeln verbracht werden kann, selbst eine oder mehrere Aktionen ausführen, wie beispielsweise eine ein- oder mehrachsige Dreh- und/oder eine ein- oder mehrdimensionale Translationsbewegung und/oder eine Greifbewegung und/oder eine Rotation, um nur einige denkbare Ausgestaltungen zu nennen. Der Arbeitsraum ist dabei durch die Vorrichtung zum Umgang mit Artikeln vorgegeben. Er entspricht einem von einer Hüllfläche eingeschlossenen Volumen, auf der alle Punkte liegen, welche eine beispielsweise einen Manipulator umfassende Vorrichtung zum Umgang mit Artikeln bei größtmöglicher Auslenkung in allen Raumwinkelbereichen maximal zu erreichen in der Lage ist.

Bekannte Vorrichtungen zum Umgang mit Artikeln sind so genannte Deltaroboter. Ein Deltaroboter umfasst eine an einem Gestell oberhalb der Fläche, auf der, oder oberhalb der Flächen, zwischen denen ein Umgang mit Artikeln erfolgt, angeordnete Basis. An der Basis ist ein Gestänge bestehend aus mindestens drei Armen und einem mit jedem der mindestens drei Arme gelenkig verbundenen, zentralen Koppelelement angeordnet. Im Zentrum des Gestänges befindet sich dabei das Koppelelement. Das Koppelelement befindet sich dabei zwischen der Basis und der Fläche auf oder zwischen der Basis und den Flächen zwischen denen ein Umgang mit Artikeln erfolgt.

Deltaroboter mit drei Armen werden auch als Tripoden bezeichnet.

Jeder der Arme besteht aus einem an der Basis um eine gestellfeste Schwenkachse angetrieben verschwenkbar angeordneten Oberarm und einem mit dem Oberarm und dem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können beispielsweise über Kugelgelenke mit den jeweils zugehörigen Oberarmen und dem Koppelelement verbunden sein. Ein solcher einzelner Unterarm ist frei schwenkbar und besitzt keine Eigenstabilität.

Alle Oberarme eines beispielsweise als Tripode ausgeführten Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechnete Schwenkbewegungen um deren gestellfeste Schwenkachsen ausführen.

Wenigstens einer der Unterarme kann aus zwei auch als Elle und Speiche bezeichneten, ein auch Parallelgestänge genanntes Parallelogrammgestänge bildenden Gestängeelementen bestehen, um das Koppelelement in zumindest einer vorgegebenen Ausrichtung relativ zur Basis zu führen.

Das Koppelelement dient dabei als Arbeitsplattform, dem so genannten Tool Central Point (TCP). An diesem kann ein zuvor beschriebener Manipulator angeordnet sein, oder es kann einen zuvor beschriebenen Manipulator umfassen, oder es kann von einem zuvor beschriebenen Manipulator umfasst werden. Im Folgenden wird der Einfachheit halber nicht mehr zwischen diesen verschiedenen Varianten unterschieden und statt dessen einheitlich die Ausgestaltung eines am Koppelelement angeordneten oder vorgesehenen Manipulators stellvertretend für alle drei Ausgestaltungen genannt, es sei denn, es ist explizit etwas anderes erwähnt.

Um einen an einem Koppelelement angeordneten Manipulator an dem Ort, an den er vermittels des Koppelelements innerhalb des Arbeitsraums verbracht wurde, zu betätigen und/oder um eine beispielsweise vertikal auf dem Koppelelement und/oder auf der Basis und/oder vertikal auf der gemeinsamen Ebene, innerhalb welcher die gestellfesten Schwenkachsen verlaufen, aufstehende Drehachse zu verdrehen, beispielsweise um einen erwünschten Umgang mit Artikeln auszuführen und/oder um den Manipulator auszurichten, ist bekannt, zwischen der Basis und dem Koppelelement mindestens eine drehbar angetrieben gelagerte Welle vorzusehen.

Eine solche zwischen der Basis und dem Koppelelement drehbar angetrieben gelagerte Welle ist dabei als mittels Kreuz- oder Kardangelenken mit ihrem Antrieb an der Basis und mit einer drehbaren Lagerung am Koppelelement, beispielsweise der drehbaren Lagerung des Manipulators am Koppelelement oder der drehbaren Lagerung der entsprechenden Eingangswelle des Manipulators oder eines Getriebes des Manipulators verbundene Kardanwelle ausgeführt. Darüber hinaus ist die Welle als Teleskopstange ausgeführt, um verschiedene Abstände des Koppelelements zur Basis während dessen Bewegungen im Arbeitsraum ausgleichen zu können. Die Teleskopstange kann ineinanderschiebbar oder beispielsweise an der Basis in Richtung deren momentaner axialer Erstreckung gleitend gelagert sein. Eine solche, als Kardanwelle und Teleskopstange ausgeführte Welle wird im Nachfolgenden als Teleskopwelle bezeichnet. Das Koppelelement kann hierbei als ein einfacher Lagerring zur Aufnahme einer drehbaren Lagerung der Teleskopwelle oder des Manipulators ausgeführt sein, der an seinem Außenumfang Anschlüsse zur Befestigung der Unterarme aufweist. Zwischen dem Lagerring und einem entsprechenden Gegenstück an der Teleskopwelle oder am Manipulator können beispielsweise Wälzelemente zur Verringerung von Reibungsverlusten und Verschleiß vorgesehen sein.

Soll beispielsweise der Manipulator gegenüber dem Koppelelement verdreht werden können, so kann eine antreibbar drehbare Lagerung des Manipulators am Koppelelement vorgesehen sein, welche beispielsweise über ein Getriebe oder direkt unverdrehbar mit einer zwischen der Basis und dem Koppelelement drehbar angetrieben gelagerten Teleskopwelle verbunden ist.

Soll der am Koppelelement angeordnete Manipulator alternativ oder zusätzlich durch wenigstens eine Drehbewegung zumindest einer Teleskopwelle betätigt werden, um eine oder mehrere Aktionen auszuführen, wie beispielsweise im Falle eines als ein Greifer ausgeführten Manipulators zur Ausführung eines einem Schließen und Öffnen des Greifers entsprechendes Zupacken und Loslassen eines oder mehrerer Artikel, so ist die zumindest eine Teleskopwelle mit mindestens einer entsprechenden Eingangswelle des Manipulators oder eines Getriebes des Manipulators verbunden, beispielsweise im Falle eines als ein Greifer ausgeführten Manipulators mit einem Drehbewegungen der Eingangswelle in Linearbewegungen beispielsweise von Klemm- oder Greifbacken des Greifers umwandelnden Zugmittelgetriebe.

Durch DE 10 2010 006 155 A1 ist eine als ein Tripode ausgeführte Vorrichtung zum Umgang mit Artikeln bekannt. Diese besteht aus einer Basis, die an einem Gestell oberhalb einer Fläche, auf der ein Umgang mit Artikeln erfolgt, angeordnet ist. An der Basis ist ein Gestänge bestehend aus drei Armen und einem mit jedem der drei Arme gelenkig verbundenen, zentralen Koppelelement angeordnet. Jeder der Arme besteht aus einem an der Basis um eine gestellfeste Schwenkachse angetrieben verschwenkbar angeordneten Oberarm und einem mit dem Oberarm und dem Koppelelement gelenkig verbundenen Unterarm. Alle Oberarme sind jeweils um innerhalb einer gemeinsamen Ebene liegende Schwenkachsen verschwenkbar angetrieben gelagert. Die Schwenkachsen schneiden einander innerhalb deren gemeinsamer Ebene. Damit weisen alle Schwenkachsen zwei Schnittpunkte mit den jeweils verbleibenden Schwenkachsen auf. Die Unterarme aller Arme bestehen jeweils aus zwei ein Parallelogrammgestänge bildenden Gestängeelementen. Dadurch wird das Koppelelement immer parallel zur Fläche, auf der ein Umgang mit Artikeln erfolgt, und parallel zur Basis geführt. Der Tripode umfasst darüber hinaus eine Teleskopwelle, mit der eine am Koppelelement drehbar gelagerte Welle gedreht werden kann. Zum Ausgleich verschiedener Abstände zwischen Koppelelement und Basis ist die Teleskopwelle an der Basis in Richtung ihrer momentanen axialen Erstreckung gleitend gelagert. Am Koppelelement kann ein Manipulator angeordnet sein, der vermittels einer Drehung der am Koppelelement drehbar gelagerten Welle betätigt, beispielsweise gedreht werden kann. Zu Zwecken weiterer Betätigungen des Manipulators können zusätzliche Teleskopwellen vorgesehen sein, welche Drehmomente von an der Basis angeordneten Antrieben zum Manipulator übertragen. Die Teleskopwellen verlaufen dabei weder parallel, noch koaxial zueinander.

Es ist ersichtlich, dass hierbei aufgrund des beschränkten vorhandenen Bauraums insbesondere im Hinblick auf die zum Umgang mit Artikeln erforderlichen, über die Teleskopwellen zu übertragenden Drehmomente die maximale Anzahl von zwischen der Basis und dem Koppelelement drehbar angetrieben gelagerten Teleskopwellen beschränkt ist. Zwar können diese Drehmomente durch höhere Drehzahlen in Verbindung mit koppelelement- bzw. manipulatorseitige Getrieben bei gleicher übertragener Leistung verringert werden, jedoch ist dies mit dem Nachteil eines steigenden Eigengewichts des Deltaroboters am Koppelelement bei gleichzeitig sinkender, zum Umgang mit Artikeln zur Verfügung stehender Nutzlast verbunden. Darüber hinaus weisen Teleskopwellen nebst den hierfür vorgesehenen, basisseitigen Antrieben den Nachteil einer aufwändigen Herstellung und Montage sowie einer teils schwierigen Integration in eine Vorrichtung zum Umgang mit Artikeln auf.

Genügt eine maximale Anzahl von zwischen der Basis und dem Koppelelement drehbar angetrieben gelagerten Teleskopwellen nicht, um eine vorgegebene Anzahl von Aktionen eines am Koppelelement vorgesehenen Manipulators voneinander unabhängig auszuführen, so ist anstelle oder zusätzlich zur Verwendung einer oder mehrerer Teleskopwellen außerdem bekannt, einen oder mehrere elektrische, pneumatische oder hydraulische Manipulatorantriebe oder eine Kombination hiervon am Koppelelement und/oder am Manipulator vorzusehen, welche über entsprechende Versorgungsleitungen von der Basis aus mit Energie versorgt werden, beispielsweise mit elektrischer Energie, Druckluft oder einer unter Druck stehenden Flüssigkeit.

Durch solche Manipulatorantriebe steigt das Eigengewicht des Deltaroboters am Koppelelement bei gleichzeitig sinkender, zum Umgang mit Artikeln zur Verfügung stehender Nutzlast.

Durch zur Steuerung und Energieversorgung des Manipulatorantriebs erforderliche Versorgungsleitungen steigt zusätzlich das Eigengewicht zwischen der Basis und dem Koppelelement, wodurch die beschriebenen Einschränkungen verstärkt werden. Darüber hinaus unterliegen die Versorgungsleitungen einer erhöhten Versagensgefahr, vor allem durch Bruch und Materialermüdung, aufgrund deren hohen Anzahl von Wechselbeanspruchungen, von denen sie einer bei jeder Bewegung des Koppelelements gegenüber der Basis ausgesetzt sind.

Damit einhergehend ist der Nachteil einer eingeschränkten Taktung. Die Taktung kann als Quotient der Anzahl von Artikeln zur Zeit, innerhalb der mit dieser Anzahl von Artikeln umgegangen wird, beschrieben werden.

Die Taktung, mit der innerhalb möglichst kurzer Zeit mit möglichst vielen Artikeln umgegangen werden kann, stellt dabei einen wesentlichen Kostenfaktor in der Verpackungstechnik und in der Verpackungsindustrie dar. Je kürzer die Taktung, desto höher ist dabei der Artikelumsatz und umso höher und damit besser ist die Auslastung der hierfür vorgesehenen Maschinen, Anlagen und Einrichtungen.

Die Taktung ist dabei begrenzt durch die Geschwindigkeit, mit der zum Umgang mit Artikeln erforderliche Bewegungen höchstens ausgeführt werden können.

Die Entfernung des Eigengewichts des Deltaroboters am Koppelelement zur Basis und dessen Exzentrizität zur Drehachse hat außerdem hohe Momente für die Dreh- und Linearbewegungen des Koppelelements innerhalb des Arbeitsraums zur Folge, einhergehend mit einer mit zunehmendem Eigengewicht abnehmenden erzielbaren Geschwindigkeit und damit Verschlechterung der Taktung bei der Verbringung.

Durch DE 10 2010 047 315 B4 ist eine als Tripode ausgeführte Vorrichtung zum Umgang mit Artikeln bekannt, bei der zwischen Elle und Speiche von als Parallelgestänge ausgeführten Unterarmen Manipulatorantriebe vorgesehen sind. Jeder Manipulatorantrieb treibt eine Welle, die vermittels eines Kardangelenks zum Koppelelement überführt. Hierdurch kann auf aufwändige Teleskopwellen verzichtet werden, oder es ist denkbar, derartige Manipulatorantriebe zusätzlich zu einer oder mehreren Teleskopwellen vorzusehen, um eine höhere Anzahl von Aktionen eines am Koppelelement vorgesehenen Manipulators voneinander unabhängig ausführen zu können und zu betätigen.

Ein Nachteil von zwischen Elle und Speiche eines oder mehrerer als Parallelgestänge ausgeführter Unterarme angeordneter Manipulatorantriebe ist das zusätzliche Eigengewicht durch die Manipulatorantriebe zwischen Basis und Koppelelement eines Tripoden, zuzüglich der zur Steuerung und Energieversorgung der Manipulatorantriebe erforderlichen Versorgungsleitungen einhergehend mit sich auf die erzielbare Taktung auswirkenden Einschränkungen. Darüber hinaus unterliegen die Versorgungsleitungen einer erhöhten Versagensgefahr, vor allem durch Bruch und Materialermüdung, aufgrund der hohen Wechselbeanspruchungen bei jeder Bewegung des Koppelelements gegenüber der Basis.

Eine Aufgabe der Erfindung ist eine verbesserte Vorrichtung zum Umgang mit Artikeln zur Verfügung zu stellen, welche einerseits ohne Einschränkungen hinsichtlich der Taktung die Nachteile des Standes der Technik behebt, andererseits eine höhere Taktung ermöglicht, sowie eine höhere Anzahl von Aktionen eines am Koppelelement vorgesehenen Manipulators voneinander unabhängig auszuführen erlaubt.

Die Aufgabe wird gelöst durch die Merkmale des unabhängigen Anspruchs. Weitere vorteilhafte Ausgestaltungen werden durch die Unteransprüche beschrieben.

Demnach ist zur Lösung der Aufgabe eine Vorrichtung zum Umgang mit Artikeln vorgesehen. Diese umfasst:
- eine Basis, welche an einer beispielsweise zentralen Partie eines Gestells oberhalb mindestens einer Fläche, auf der mit Artikeln umgegangen wird, beispielsweise oberhalb einer Fläche, auf der mit Artikeln umgegangen wird oder oberhalb von zwei oder mehreren Flächen, auf und/oder zwischen denen mit Artikeln umgegangen wird, angeordnet ist, sowie
- ein Gestänge bestehend aus mindestens drei angetriebenen Armen und einem zentralen Koppelelement.

Die Fläche auf der oder die Flächen zwischen denen ein Umgang mit Artikeln erfolgt, kann bzw. können beispielsweise horizontal oder geneigt ebenen oder gewölbt verlaufend, fest stehend oder bewegt sein, wobei auch beispielsweise abschnittsweise Kombinationen möglich sind und/oder beispielsweise eine Fläche eine Eigenschaft aufweist, wie beispielsweise eine fest stehende Anordnung, und die andere Fläche eine hiervon verschiedene Eigenschaft aufweist, wie beispielsweise eine bewegte Ausführung.

Jeder der angetriebenen Arme besteht aus einem um eine eigene, basisseitige und damit gestellfeste, beispielsweise parallel zu der Fläche, auf der mit Artikeln umgegangen wird, oder parallel zu den Flächen, zwischen denen mit Artikeln umgegangen wird, verlaufende Schwenkachse drehbar angetrieben gelagerten Oberarm und einem an dem Oberarm gelenkig angeordneten und mit dem Koppelement gelenkig verbundenen Unterarm. Jeder der Arme verfügt über einen eigenen Antrieb zum individuellen Verschwenken des jeweiligen Oberarms um dessen gestellfeste Schwenkachse.

Um Bewegungen in beliebiger Richtung parallel zu der Fläche auf oder parallel zu den Flächen zwischen denen ein Umgang mit Artikeln erfolgt ausführen zu können, schneidet wenigstens eine gestellfeste Schwenkachse mindestens eine der verbleibenden Schwenkachsen. Zwei oder mehr Schwenkachsen können parallel verlaufen. Vorzugsweise weisen alle Schwenkachsen zwei Schnittpunkte mit anderen Schwenkachsen auf.

Als Antriebe für die Oberarme kommen via der Schwenkachsen auf die Oberarme einwirkende Schwenkantriebe mit oder ohne Getriebe, beispielsweise getriebelose Direktantriebe, oder andersartige, beispielsweise über Zug- und/oder Druckstangen oder als Linearantriebe ausgeführte, auf die Oberarme einwirkende, beispielsweise elektrische, pneumatische oder hydraulische Antriebe in Frage.

Wenigstens einer der Unterarme der Vorrichtung kann als ein Parallelgestänge aus zwei Elle und Speiche bildenden Gestängeelementen ausgebildet sein. Das Parallelgestänge ist vorzugsweise so ausgebildet, dass das Koppelelement parallel zur Schwenkachse des zugehörigen Oberarms des jeweiligen Arms gehalten wird. Dies kann dadurch erhalten werden, indem die das Parallelgestänge bildenden Gestängeelemente des Unterarms in Richtung der Erstreckung der Schwenkachse des zugehörigen Oberarms des jeweiligen Arms zueinander beabstandet sind und die gelenkigen Verbindungen der beiden Gestängeelemente mit dem Oberarm auf einer ersten, parallel zur Schwenkachse des zugehörigen Oberarms des jeweiligen Arms verlaufenden Geraden liegen, sowie die gelenkigen Verbindungen der beiden Gestängeelemente mit dem Koppelelement auf einer zweiten, parallel zur Schwenkachse des zugehörigen Oberarms des jeweiligen Arms verlaufenden Geraden liegen. Eine Ausführung eines Unterarms als ein solches Parallelgestänge hält das Koppelelement parallel zur Schwenkachse des zugehörigen Oberarms des jeweiligen Arms.

Vorzugsweise sind mindestens zwei Unterarme von Armen der Vorrichtung, deren Oberarme nicht parallel zueinander verlaufende, sondern einander vorzugsweise schneidende oder windschief zueinander stehende Schwenkachsen aufweisen, als Parallelgestänge ausgeführt. Dadurch kann das Koppelelement in stets gleicher Ausrichtung relativ beispielsweise zur Basis im Arbeitsraum geführt werden.

Besonders bevorzugt sind alle Unterarme aller Arme als Parallelgestänge ausgeführt. Dadurch wird eine besonders stabile Parallelführung des Koppelelements beispielsweise zur Basis erhalten.

Die Vorrichtung zeichnet sich durch mindestens einen eine Wellenleistung von der Basis zum Koppelelement übertragenden Antrieb aus, welcher Antrieb Drehbewegungen entlang wenigstens eines Arms der Vorrichtung von der Basis zum Koppelelement überträgt.

Der Antrieb kann beispielsweise mindestens ein biegeelastisches Element umfassen, welches entlang wenigstens eines Arms der Vorrichtung verlegt ist und welches an der Basis vermittels beispielsweise eines Antriebsmotors erzeugte Drehbewegungen zum Koppelelement entlang wenigstens eines Arms der Vorrichtung überträgt. Ein solches biegeelastisches, Drehbewegungen übertragendes Element ist beispielsweise eine biegsame Welle, wie sie beispielsweise von Tachowellen bekannt ist.

Um den Nachteil eines hohen Verschleißes von biegsamen Wellen insbesondere bei starken Umlenkungen, wie sie insbesondere im Bereich der gelenkigen Verbindung zwischen Oberarm und Unterarm eines mit einem entsprechenden Antrieb ausgestatteten Arms vorkommen, zu vermeiden, umfasst der Antrieb vorzugsweise wenigstens:
- mindestens einen basisseitigen Antriebsmotor,
- mindestens ein erstes Antriebswellenelement, welches parallel zu einem Oberarm eines Arms der Vorrichtung verläuft,
- mindestens ein zweites Antriebswellenelement, welches parallel zu einem Unterarm desjenigen Arms der Vorrichtung verläuft, parallel zu dessen Oberarm mindestens ein erstes Antriebswellenelement verläuft,
- mindestens ein erstes Übersetzungselement, welches Drehbewegungen des basisseitigen Antriebsmotors auf das mindestens eine erste Antriebswellenelement überträgt,
- mindestens ein zweites Übersetzungselement, welches Drehbewegungen des mindestens einen ersten Antriebswellenelements auf das mindestens eine zweite Antriebswellenelement überträgt, und
- mindestens ein drittes Übersetzungselement, welches Drehbewegungen des mindestens einen zweiten Antriebswellenelements zum Koppelelement, beispielsweise an eine Eingangswelle eines am Koppelelement vorgesehenen Manipulators überträgt.

Ein oder mehrere Antriebswellenelemente können eine biegsame Welle umfassen oder von einer solchen umfasst sein.

Zumindest ein erstes Antriebswellenelement kann eine koaxial zum Oberarm eines entsprechend ausgestatteten Arms der Vorrichtung verlaufende erste Antriebswelle umfassen. Denkbar ist beispielsweise dass der Oberarm durch eine erste Antriebswelle gebildet ist, oder dass der Oberarm eine erste Antriebswelle umfasst, welche auf einem zentralen, hinsichtlich des rotatorischen Freiheitsgrads der ersten Antriebswelle unverdrehbaren, stabförmigen Stützelement drehbar gelagert ist. Das Stützelement kann an der zugehörigen Schwenkachse des entsprechenden Arms der Vorrichtung um die Schwenkachse verschwenkbar gelagert und mit dem Unterarm des entsprechenden Arms gelenkig verbunden sein.

Vorzugsweise verläuft die Antriebswelle koaxial innerhalb des Oberarms. Hierbei kann der Oberarm ein rohrförmiges, hohles Stützelement umfassen, welches an der zugehörigen Schwenkachse des entsprechenden Arms der Vorrichtung um die Schwenkachse verschwenkbar gelagert und mit dem Unterarm des entsprechenden Arms gelenkig verbunden sein kann. Innerhalb des Stützelements kann die Antriebswelle drehbar gelagert sein.

Zumindest ein zweites Antriebswellenelement kann Elle und/oder Speiche eines als Parallelgestänge ausgeführten Unterarms des entsprechend ausgestatteten Arms der Vorrichtung umfassen. Elle und/oder Speiche sind hierbei um ihre Längsachse drehbar ausgeführt und bilden wenigstens eine zweite Antriebswelle. Bevorzugt sind beide, Elle und Speiche bildenden Gestängeelemente jeweils als ein zweites Antriebswellenelement ausgeführt, wobei besonders bevorzugt die Drehrichtungen von Elle und Speiche gegensinnig sind. Dadurch wird bei einer Betätigung eines entsprechenden, zusätzlichen Antriebs ein Verzug des Gestänges aufgrund einer einseitigen Drehmomentübertragung verringert, gar vermieden. Grundsätzlich denkbar ist auch, dass ein zweites Antriebswellenelement eine koaxial innerhalb von Elle und/oder Speiche geführte und drehbar gelagerte zweite Antriebswelle umfasst.

Zumindest ein erstes und/oder ein zweites und/oder ein drittes Übersetzungselement kann ein Winkel- oder Kegelradgetriebe umfassen.

Wenigstens ein erstes und/oder ein zweites und/oder ein drittes Übersetzungselement ist im Bereich einer gelenkigen Verbindung angeordnet. Das erste Übersetzungselement ist hierbei im Bereich der Schwenkachse an der gelenkigen Verbindung zwischen Basis und Oberarm vorgesehen. Das zweite Übersetzungselement ist hierbei im Bereich der gelenkigen Verbindung zwischen Oberarm und Unterarm vorgesehen. Das dritte Übersetzungselement ist hierbei im Bereich der gelenkigen Verbindung zwischen Unterarm und Koppelelement vorgesehen.

Der Antrieb kann zusätzlich Steuermittel umfassen, welche Schwenkbewegungen eines oder mehrerer Schwenkantriebe der Arme der Vorrichtung, welche sich auf Stellbewegungen des mindestens einen Antriebs auswirken, durch entsprechende Minder- oder Mehrdrehungen des mindestens einen Antriebs ausgleichen.

Die vermittels eines Antriebs entlang wenigstens eines Arms der Vorrichtung von der Basis zum Koppelelement übertragenen Drehbewegungen können in einem beliebigen Winkel, beispielsweise horizontal oder vertikal in das Koppelelement eingebracht werden. Hierdurch wird eine zusätzliche Anpassungs- und Vereinfachungsmöglichkeit erhalten, abhängig beispielsweise von einer erforderlichen Einbringung von Drehbewegungen in einen am Koppelelement vorgesehenen Manipulator.

Die Vorrichtung kann zusätzlich mindestens eine Teleskopwelle nebst zugeordnetem, basisseitigem Teleskopwellenantrieb zur Drehbewegungsübertragung von der Basis zum Koppelelement aufweisen.

Neben einer Behebung der Nachteile des Standes der Technik und einer Lösung der gestellten Aufgabe sich ergebende Vorteile gegenüber dem Stand der Technik sind unter Anderem:
- eine geringere zu bewegende Masse aufgrund eines möglichen Verzichts auf zusätzliche Elemente zwischen Basis und Koppelelement, wie beispielsweise Teleskopwellen, Versorgungsleitungen einhergehend mit einer höheren maximalen Nutzlast der Vorrichtung und/oder einer höheren erzielbaren Taktung.
- eine Vermeidung eines Versagens von Versorgungsleitungen zwischen Basis und Koppelelement aufgrund von Wechselbeanspruchungen.
- eine im Vergleich zu einer Verwendung von Teleskopwellen gleiche Masse am Koppelelement aufgrund vergleichbarer Wellenleistungsübertragung (Drehmoment x Drehzahl), dadurch keine Einschränkungen hinsichtlich bewegte Masse, Taktung im Vergleich zu Teleskopwellen.
- eine beliebige Kombinationsmöglichkeit mit Teleskopwellen, beispielsweise wenn eine maximale Anzahl von Antrieben mit entlang der Arme erfolgender Wellenleistungsübertragung von der Basis zum Koppelelement nicht genügt, um eine vorgegebene Anzahl von Aktionen eines am Koppelelement vorgesehenen Manipulators voneinander unabhängig auszuführen, oder wenn eine maximale Anzahl von zwischen der Basis und dem Koppelelement drehbar angetrieben gelagerten Teleskopwellen nicht genügt, um eine vorgegebene Anzahl von Aktionen eines am Koppelelement vorgesehenen Manipulators voneinander unabhängig auszuführen.

Ein besonders hervorzuhebender Vorteil gegenüber dem Stand der Technik ist ein höheres übertragbares Drehmoment von der Basis zum Koppelelement, da dies bei dem Antrieb lediglich durch die Torsionssteifigkeit der Antriebswellenelemente beschränkt ist.

Am Koppelelement kann ein Manipulator angeordnet sein oder das Koppelelement kann einen Manipulator umfassen oder von einem Manipulator umfasst werden.

Durch eine vermittels eines Antriebs entlang wenigstens eines Arms der Vorrichtung von der Basis zum Koppelelement übertragene Drehbewegung kann beispielsweise ein am Koppelelement vorgesehener Manipulator um eine beispielsweise vertikal auf dem Koppelelement aufstehende Drehachse verdreht werden.

Alternativ oder zusätzlich kann eine vermittels eines Antriebs entlang wenigstens eines Arms der Vorrichtung von der Basis zum Koppelelement übertragene Drehbewegung vorgesehen sein, um den Manipulator zu betätigen, beispielsweise damit dieser eine Aktion ausführen kann.

Bei dem Manipulator kann es sich beispielsweise um einen Greifer handeln, der durch vermittels eines Antriebs entlang wenigstens eines Arms der Vorrichtung von der Basis zum Koppelelement übertragene, gegensinnige Drehbewegungen geschlossen und geöffnet werden kann, entsprechend einem Zupacken und einem Loslassen eines oder mehrerer Artikel. Zwischen Zupacken und Loslassen kann eine Verbringung durch Betätigung der Schwenkantriebe der Vorrichtung oder durch eine Aktion des Manipulators der Vorrichtung erfolgen, bei der die gegriffenen Artikel beispielsweise angehoben und versetzt werden können.

Bei einem beispielsweise als rotierender Finger ausgeführten Manipulator können vermittels eines Antriebs entlang wenigstens eines Arms der Vorrichtung von der Basis zum Koppelelement übertragene Drehbewegungen dazu dienen, Artikel beispielsweise durch Reibung auf einer Fläche, auf der mit Artikeln umgegangen wird, auszurichten und/oder zu verbringen.

Bei einem beispielsweise zur Manipulation von als Behälter ausgeführten Artikeln durch Entfernen oder Aufbringen beispielsweise eines Schraubverschlusses vorgesehenen und entsprechend ausgeführten Manipulator können vermittels eines Antriebs entlang wenigstens eines Arms der Vorrichtung von der Basis zum Koppelelement übertragene Drehbewegungen dazu dienen, beispielsweise Behälterdeckel - etwa im Recycling - auf- oder - beispielsweise bei der Abfüllungzuzuschrauben.

Bei einem beispielsweise zur Behandlung von Artikeln beispielsweise durch Anbringung einer Umreifung um gruppierte Artikel vorgesehenen und entsprechend ausgeführten Manipulator können vermittels eines oder mehrerer Antriebe entlang wenigstens eines Arms der Vorrichtung von der Basis zum Koppelelement übertragene Drehbewegungen dazu dienen, beispielsweise ein Umreifungsband abzulängen und/oder dessen Enden nach dem Umwickeln der Artikel miteinander zu verbinden, beispielsweise durch bördeln. Dabei können für verschiedene erforderliche Aktionen eine entsprechende Anzahl von jeweils Drehbewegungen entlang wenigstens eines Arms der Vorrichtung übertragender Antriebe vorgesehen sein.

Es ist ersichtlich, dass die Erfindung durch eine als ein Deltaroboter oder ein Tripode, kurz Tripod ausgeführte Vorrichtung zum Umgang mit Artikeln verwirklicht sein kann, bei welcher zwischen der Basis und dem Koppelelement mindestens ein Antrieb mit entlang der Arme erfolgender, einem Produkt aus Drehzahl und Drehmoment proportionaler Wellenleistungsübertragung von der Basis zum Koppelelement vorgesehen ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Figur 1: eine Vorrichtung zum Umgang mit Artikeln mit einem eine Wellenleistung übertragenden Antrieb, welcher Drehbewegungen entlang wenigstens eines Arms der Vorrichtung von der Basis zum Koppelelement überträgt, in einer perspektivischen Ansicht von oberhalb teilweise im Röntgenblick gesehen.
- Figur 2: eine Detailansicht der Vorrichtung aus Fig. 1 in einer perspektivischen Ansicht von oberhalb teilweise im Röntgenblick gesehen, welcher Detailansicht:
- ein basisseitiger Antriebsmotor eines Antriebs,
- ein erstes Antriebswellenelement,
- ein erstes Übersetzungselement zwischen Antriebsmotor und erstem Antriebswellenelement,
- ein zweites Antriebswellenelement, sowie
- ein zweites Übersetzungselement zwischen erstem Antriebswellenelement und zweitem Antriebswellenelement
zu entnehmen ist.

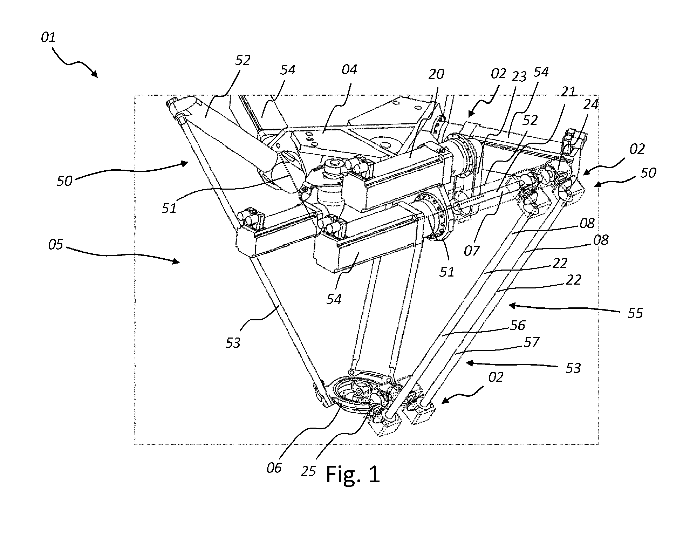

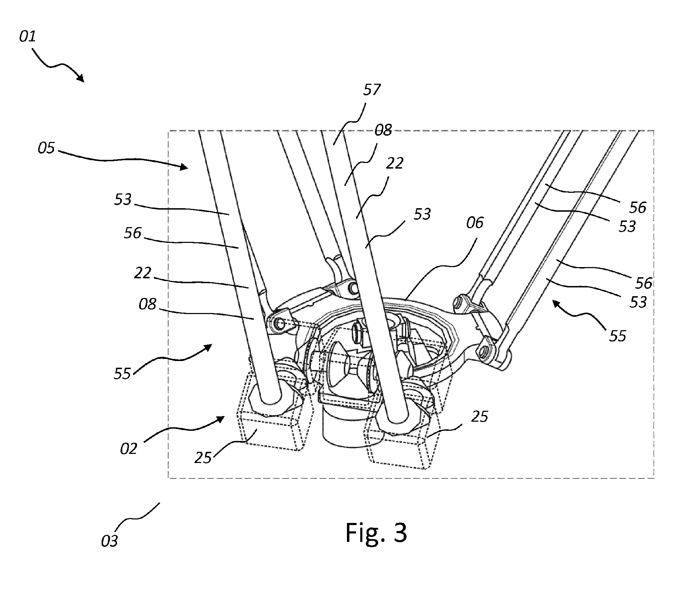

- Figur 3: eine Detailansicht der Vorrichtung aus Fig. 1 in einer perspektivischen Ansicht von oberhalb teilweise im Röntgenblick gesehen, welcher Detailansicht:
- ein zweites Antriebswellenelement, sowie
- ein zwischen zweitem Antriebswellenelement und Koppelelement angeordnetes drittes Übersetzungselement, welches Drehbewegungen des zweiten Antriebswellenelements zum Koppelelement überträgt,
zu entnehmen ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Eine in Figur 1 bis Figur 3 ganz oder in Teilen dargestellte Vorrichtung 01 zum Umgang mit Artikeln umfasst im Wesentlichen:
- eine Basis 04, welche an einer beispielsweise zentralen Partie eines Gestells oberhalb mindestens einer Fläche, auf der mit Artikeln umgegangen wird, beispielsweise oberhalb einer Fläche, auf der mit Artikeln umgegangen wird oder oberhalb von zwei oder mehreren Flächen, auf und/oder zwischen denen mit Artikeln umgegangen wird, angeordnet ist, sowie
- ein Gestänge 05 bestehend aus mindestens drei angetriebenen Armen 50 und einem zentralen Koppelelement 06.

Jeder der angetriebenen Arme 50 besteht aus einem um eine eigene, vorzugsweise parallel zu der mindestens einen Fläche, auf der mit Artikeln umgegangen wird, verlaufende und an der Basis 04 angeordnete Schwenkachse 51 drehbar angetrieben gelagerten Oberarm 52 und einem an dem Oberarm 52 gelenkig angeordneten und mit dem Koppelement 06 gelenkig verbundenen Unterarm 53.

Bevorzugt liegen die Schwenkachsen 51, an denen die Oberarme 52 der Arme 50 schwenkbar angetrieben gelagert sind, innerhalb einer gemeinsamen Ebene.

Ferner verfügt jeder der angetriebenen Arme 50 über einen eigenen Schwenkantrieb 54 zum individuellen Verschwenken des jeweiligen Oberarms 52 um dessen Schwenkachse 51. Jeder Schwenkantrieb 54 jeden Oberarms 52 ist dabei unabhängig von den Schwenkantriebe 54 der verbleibenden Oberarme 52 steuerbar.

Die Schwenkantriebe 54 für die Oberarme 52 können mit oder beispielsweise als getriebelose Direktantriebe ohne Getriebe, oder andersartig, beispielsweise Zug- und/oder Druckstangen umfassend oder als Linearantriebe ausgeführt sein. Grundsätzlich kommen auch auf die Oberarme 52 einwirkende, beispielsweise elektrische, pneumatische oder hydraulische Schwenkantriebe 54 in Frage.

Die Vorrichtung 01 umfasst darüber hinaus mindestens einen eine Wellenleistung von der Basis zum Koppelelement übertragenden Antrieb 02. Der Antrieb 02 erzeugt basisseitig Drehbewegungen und überträgt diese entlang wenigstens eines Arms 50 der Vorrichtung 01 von der Basis 04 zum Koppelelement 06.

Der eine Wellenleistung von der Basis 04 zum Koppelelement 06 übertragende Antrieb 02 umfasst vorzugsweise wenigstens:
- mindestens einen basisseitigen Antriebsmotor 20,
- mindestens ein erstes Antriebswellenelement 21, welches parallel zum Oberarm 52 eines Arms 50 der Vorrichtung 01 verläuft,
- mindestens ein zweites Antriebswellenelement 22, welches parallel zum Unterarm 53 desjenigen Arms 50 der Vorrichtung 01 verläuft, parallel zu dessen Oberarm 52 mindestens ein erstes Antriebswellenelement 21 verläuft,
- mindestens ein erstes Übersetzungselement 23, welches Drehbewegungen des basisseitigen Antriebsmotors 20 auf das mindestens eine erste Antriebswellenelement 21 überträgt,
- mindestens ein zweites Übersetzungselement 24, welches Drehbewegungen des mindestens einen ersten Antriebswellenelements 21 auf das mindestens eine zweite Antriebswellenelement 22 überträgt, und
- mindestens ein drittes Übersetzungselement 25, welches Drehbewegungen des mindestens einen zweiten Antriebswellenelements 22 zum Koppelelement 06, beispielsweise an eine Eingangswelle eines am Koppelelement 06 vorgesehenen Manipulators überträgt
umfasst.

Zumindest ein erstes Antriebswellenelement 21 kann eine koaxial zum Oberarm 52 eines entsprechend ausgestatteten Arms 50 der Vorrichtung 01 verlaufende erste Antriebswelle 07 umfassen.

Die erste Antriebswelle 07 kann koaxial innerhalb des Oberarms 52 verlaufen.

Wenigstens einer der Unterarme 53 kann als ein Parallelgestänge 55 aus zwei Elle und Speiche bildenden, parallel verlaufenden Gestängeelementen 56, 57 ausgebildet sein. Die den Unterarm 53 bildenden Gestängeelemente 56, 57 des Parallelgestänges 55 sind hierbei bevorzugt in Richtung der Erstreckung der Schwenkachse 51 des zugehörigen Oberarms 52 des jeweiligen Arms 50 zueinander beabstandet angeordnet.

Die gelenkigen Verbindungen der beiden Gestängeelemente 56, 57 eines Unterarms 53 mit dem zugehörigen Oberarm 52 des jeweiligen Arms 50 liegen dabei auf einer ersten, parallel zur Schwenkachse 51 des Oberarms 52 des jeweiligen Arms 50 verlaufenden Geraden. Ebenso liegen hierbei die gelenkigen Verbindungen der beiden Gestängeelemente 56, 57 mit dem Koppelelement 06 auf einer zweiten, parallel zur Schwenkachse 51 des zugehörigen Oberarms 52 des jeweiligen Arms 50 verlaufenden Geraden. Eine Ausführung eines Unterarms 53 als ein solches Parallelgestänge 55 hält das Koppelelement 06 parallel zur Schwenkachse 51 des zugehörigen Oberarms 52 des jeweiligen Arms 50.

Bevorzugt sind mindestens zwei Unterarme 53 von Armen 50, deren Oberarme 52 nicht parallel zueinander verlaufende, sondern einander vorzugsweise schneidende oder windschief zueinander stehende Schwenkachsen 51 aufweisen, bzw. um nicht parallel zueinander verlaufende Schwenkachsen 51 angetrieben gelagert sind, als Parallelgestänge 55 ausgeführt. Dadurch kann das Koppelelement 06 in stets gleicher Ausrichtung relativ beispielsweise zur Basis 04 im Arbeitsraum geführt werden.

Besonders bevorzugt sind die Unterarme 53 aller Arme 50 als Parallelgestänge 55 ausgeführt. Dadurch wird eine besonders stabile Parallelführung des Koppelelements 06 beispielsweise zur Basis 06 erhalten.

Zumindest ein zweites Antriebswellenelement 22 kann Elle und/oder Speiche eines als Parallelgestänge 55 aus zwei, Elle und Speiche bildenden, parallel verlaufenden Gestängeelementen 56, 57 ausgeführten Unterarms 53 eines Arms 50 der Vorrichtung 01 umfassen, parallel zu dessen Oberarm 52 mindestens ein erstes Antriebswellenelement 21 verläuft.

Dabei kann Elle oder Speiche um ihre Längsachse drehbar ausgeführt sein und wenigstens eine zweite Antriebswelle bilden.

Auch können Elle und Speiche um ihre Längsachsen drehbar ausgeführt sein und wenigstens eine zweite Antriebswelle bilden. Dabei sind Elle und Speiche jeweils als ein zweites Antriebswellenelement ausgeführt. Vorzugsweise sind hierbei die Drehrichtungen von Elle und Speiche gegensinnig. Dadurch wird bei einer Betätigung eines entsprechenden, zusätzlichen Antriebs ein Verzug des Gestänges aufgrund einer einseitigen Drehmomentübertragung verringert, gar vermieden.

Alternativ zu einer Ausführung von Elle und/oder Speiche als zumindest ein zweites Antriebswellenelement 22 kann wenigstens ein zweites Antriebswellenelement 22 vorgesehen sein, welches mindestens eine koaxial innerhalb von Elle und/oder Speiche eines als Parallelgestänge 55 aus zwei, Elle und Speiche bildenden, parallel verlaufenden Gestängeelementen 56, 57 ausgeführten Unterarms 53 eines Arms 50 der Vorrichtung 01, parallel zu dessen Oberarm 52 mindestens ein erstes Antriebswellenelement 21 verläuft, geführte und drehbar gelagerte zweite Antriebswelle 08 umfassen.

Wenn koaxial innerhalb von Elle und Speiche jeweils eine drehbar gelagerte zweite Antriebswelle 08 verläuft sind die Drehrichtungen der koaxial innerhalb von Elle und Speiche jeweils drehbar gelagerten zweiten Antriebswellen 08 bevorzugt gegensinnig.

Zumindest ein erstes und/oder ein zweites und/oder ein drittes Übersetzungselement 23, 24, 25 kann ein Winkel- oder Kegelradgetriebe umfassen.

Wenigstens ein erstes und/oder ein zweites und/oder ein drittes Übersetzungselement 23, 24, 25 ist im Bereich einer gelenkigen Verbindung angeordnet. Das erste Übersetzungselement 23 ist hierbei im Bereich der Schwenkachse 51 an der gelenkigen Verbindung zwischen Basis 04 und Oberarm 52 vorgesehen.

Das zweite Übersetzungselement 24 ist hierbei im Bereich der gelenkigen Verbindung zwischen Oberarm 52 und Unterarm 53 vorgesehen. Das dritte Übersetzungselement 25 ist hierbei im Bereich der gelenkigen Verbindung zwischen Unterarm 53 und Koppelelement 06 vorgesehen.

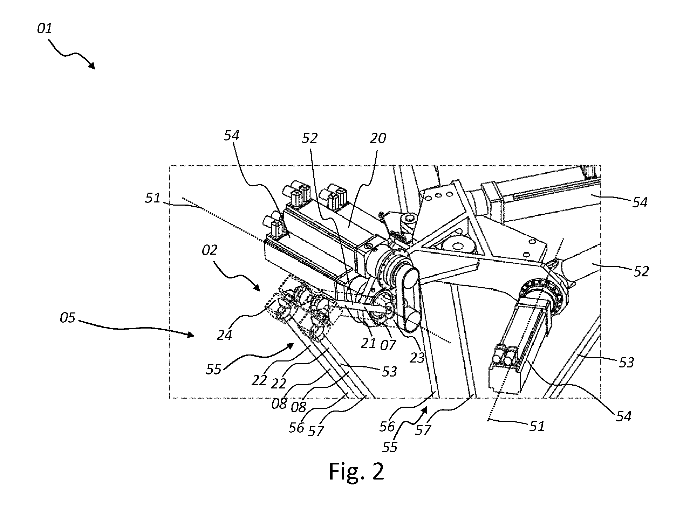

Zumindest das erste Übersetzungselement 23 kann wie in Fig. 1 und Fig. 2 dargestellt mehrstufig ausgeführt sein, wobei eine erste Stufe beispielsweise wie in Fig. 1 und Fig. 2 dargestellt ein Zugmittelgetriebe, beispielsweise einen Riementrieb, umfassen kann. Als Zugmittel kommen dabei beispielsweise Zahnriemen oder zahnlose Riemen, wie etwa Flach- oder Rundriemen, Keilriemen, Keilrippenriemen, Ketten und dergleichen in Frage. Die Aufzählung erhebt hierbei keinen Anspruch auf Vollständigkeit.

Indem insbesondere im Bereich eines als Parallelgestänge 55 ausgeführten Unterarms 53 sowohl Elle, als auch Speiche als zweite Antriebswellenelemente 22 zur Drehmomentübertragung genutzt werden oder zweite Antriebswellenelemente 22 umfassen, wird im filigranen Unterarm 53 das zu übertragende Drehmoment aufgeteilt, wodurch insgesamt ein höheres Drehmoment und damit eine höhere Wellenleistung zum Koppelelement 06 übertragen werden kann. Der verhältnismäßig stark dimensionierte Oberarm 52 unterliegt derartigen Beschränkungen nicht, weshalb bei der Drehmomentübertragung entlang der Arme 50 die Unterarme 53 einen Flaschenhals bilden.

Wenigstens eine vermittels zumindest eines eine Wellenleistung von der Basis 04 zum Koppelelement 06 übertragenden Antriebs 02 zum Koppelelement 06 übertragene Drehbewegung kann dazu vorgesehen sein, einen am Koppelelement 06 vorgesehenen Manipulator zu betätigen, beispielsweise damit dieser eine Aktion ausführen kann.

Ein am Koppelelement 06 vorgesehener Manipulator kann vom Koppelelement 06 umfasst sein, oder das Koppelelement 06 umfassen.

Eine vermittels einer Drehbewegung betätigte, von einem Manipulator ausführbare Aktion ist dabei abhängig von der Bauweise des Manipulators.

Beispielsweise kann der Manipulator als ein Greifer ausgeführt sein oder einen Greifer umfassen. Durch vermittels eines Antriebs 02 basisseitig erzeugte und zum Koppelelement 06 übertragene, gegensinnige Drehbewegungen kann der Greifer geschlossen und geöffnet werden, entsprechend einem Zupacken und einem Loslassen eines oder mehrerer Artikel. Zwischen Zupacken und Loslassen kann eine Verbringung erfolgen, bei der die gegriffenen Artikel beispielsweise angehoben und versetzt werden können. Der Greifer besteht hierbei beispielsweise aus zwei gegeneinander beweglichen Klemm- oder Greifbacken und einer Transformationseinrichtung, welche vermittels des Antriebs 02 erzeugte und zum Koppelelement 06 übertragene Drehbewegungen in Linearbewegungen der Klemm- oder Greifbacken aufeinander zu oder voneinander weg umsetzt. Die Transformationseinrichtung kann beispielsweise durch ein Zugmittelgetriebe, beispielsweise einen Riementrieb verwirklicht sein. Als Zugmittel kommen dabei beispielsweise Zahnriemen oder zahnlose Riemen, wie etwa Flach- oder Rundriemen, Keilriemen, Keilrippenriemen, Ketten und dergleichen in Frage. Die Aufzählung erhebt hierbei keinen Anspruch auf Vollständigkeit. Durch eine Drehbewegung des Antriebs 02 in einer ersten Richtung werden die Klemm- oder Greifbacken beispielsweise aufeinander zu bewegt und damit der Greifer geschlossen. Durch eine gegensinnige Drehbewegung des Antriebs 02 in einer zweiten, der ersten Richtung entgegengesetzten Richtung werden die Klemm- oder Greifbacken beispielsweise voneinander weg bewegt und damit der Greifer geöffnet.

Wichtig ist hervorzuheben, dass die Vorrichtung 01 zusätzlich zu einem eine Wellenleistung von der Basis zum Koppelelement 06 übertragenden Antrieb 02 mindestens eine angetriebene Teleskopwelle zwischen Basis 04 und Koppelelement 06 aufweisen kann, welche mit einem basisseitigen Teleskopwellenantrieb kardanisch gelenkig verbunden ist, und über mindestens ein Kreuz- oder Kardangelenk gelenkig drehbar am Koppelelement 06 gelagert ist, und welche wenigstens eine Drehbewegung vom Teleskopwellenantrieb an der Basis 04 zum Koppelelement 06 übertragen kann.

Beispielsweise kann die Teleskopwelle mit einer drehbaren Lagerung und/oder einer Welle am Koppelelement 06 verbunden sein.

Die Erfindung ist insbesondere im Bereich der Herstellung und dem Betrieb von Vorrichtungen der Automatisierungstechnik gewerblich anwendbar, beispielsweise in der Automatisierungstechnik für die Lebensmittel- und Getränkeindustrie und/oder in der Verpackungstechnik und in der Verpackungsindustrie.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Vorrichtung
- 02: Antrieb
- 04: Basis
- 05: Gestänge
- 06: Koppelelement
- 07: erste Antriebswelle
- 08: zweite Antriebswelle
- 20: Antriebsmotor
- 21: erstes Antriebswellenelement
- 22: zweites Antriebswellenelement
- 23: erstes Übersetzungselement
- 24: zweites Übersetzungselement
- 25: drittes Übersetzungselement
- 50: Arm
- 51: Schwenkachse
- 52: Oberarm
- 53: Unterarm
- 54: Schwenkantrieb zum Schwenken eines Oberarms 52
- 55: Parallelgestänge
- 56: Gestängeelement
- 57: Gestängeelement

## Patentansprüche

1. Vorrichtung (01) zum Umgang mit Artikeln, umfassend:
- eine Basis (04) sowie
- ein Gestänge (05) bestehend aus mindestens drei angetriebenen Armen (50) und einem zentralen Koppelelement (06),
wobei jeder der angetriebenen Arme (50):
- aus einem um eine eigene, an der Basis (04) angeordnete Schwenkachse (51) drehbar angetrieben gelagerten Oberarm (52) und einem an dem Oberarm (52) gelenkig angeordneten und mit dem Koppelement (06) gelenkig verbundenen Unterarm (53) besteht, und
- über einen eigenen Schwenkantrieb (54) zum individuellen Verschwenken des Oberarms (52) um dessen Schwenkachse (51) verfügt,
**dadurch gekennzeichnet, dass** mindestens ein eine Wellenleistung von der Basis (04) zum Koppelelement (06) übertragenden Antrieb (02) vorgesehen ist, welcher Antrieb (02) Drehbewegungen entlang wenigstens eines Arms (50) von der Basis (04) zum Koppelelement (06) überträgt.

2. Vorrichtung nach Anspruch 1, wobei der mindestens eine eine Wellenleistung von der Basis (04) zum Koppelelement (06) übertragende Antrieb (02) wenigstens:
- mindestens einen basisseitigen Antriebsmotor (20),
- mindestens ein erstes Antriebswellenelement (21), welches parallel zum Oberarm (52) eines Arms (50) verläuft,
- mindestens ein zweites Antriebswellenelement (22), welches parallel zum Unterarm (53) desjenigen Arms (50) verläuft, parallel zu dessen Oberarm (52) mindestens ein erstes Antriebswellenelement (21) verläuft,
- mindestens ein erstes Übersetzungselement (23), welches Drehbewegungen des basisseitigen Antriebsmotors (20) auf das mindestens eine erste Antriebswellenelement (21) überträgt,
- mindestens ein zweites Übersetzungselement (24), welches Drehbewegungen des mindestens einen ersten Antriebswellenelements (21) auf das mindestens eine zweite Antriebswellenelement (22) überträgt, und
- mindestens ein drittes Übersetzungselement (25), welches Drehbewegungen des mindestens einen zweiten Antriebswellenelements (22) zum Koppelelement (06) überträgt
umfasst.

3. Vorrichtung nach Anspruch 2, wobei zumindest ein erstes Antriebswellenelement (21) eine koaxial zum Oberarm (52) eines Arms (50) verlaufende erste Antriebswelle (07) umfasst.

4. Vorrichtung nach Anspruch 3, wobei die zweite Antriebswelle (07) koaxial innerhalb des Oberarms (52) verläuft.

5. Vorrichtung nach Anspruch 2, 3 oder 4, wobei zumindest ein zweites Antriebswellenelement (22) Elle und/oder Speiche eines als Parallelgestänge (55) aus zwei, Elle und Speiche bildenden, parallel verlaufenden Gestängeelementen (56, 57) ausgeführten Unterarms (53) eines Arms (50) der Vorrichtung umfasst, parallel zu dessen Oberarm (52) mindestens ein erstes Antriebswellenelement (21) verläuft.

6. Vorrichtung nach Anspruch 5, wobei Elle (56, 57) und/oder Speiche (57, 56) um ihre Längsachse drehbar ausgeführt sind/ist und wenigstens eine zweite Antriebswelle (08) bilden/bildet.

7. Vorrichtung nach Anspruch 5 oder 6, wobei Elle (56, 57) und Speiche (57, 56) jeweils als ein zweites Antriebswellenelement (22) ausgeführt sind.

8. Vorrichtung nach Anspruch 7, wobei die Drehrichtungen von Elle (56, 57) und Speiche (57, 56) gegensinnig sind.

9. Vorrichtung nach Anspruch 2, 3 oder 4, wobei zumindest ein zweites Antriebswellenelement (22) eine koaxial innerhalb von Elle und/oder Speiche eines als Parallelgestänge (55) aus zwei, Elle und Speiche bildenden, parallel verlaufenden Gestängeelementen (56, 57) ausgeführten Unterarms (53) eines Arms (50), parallel zu dessen Oberarm (52) mindestens ein erstes Antriebswellenelement (21) verläuft, geführte und drehbar gelagerte zweite Antriebswelle (08) umfasst.

10. Vorrichtung nach Anspruch 9, wobei koaxial innerhalb von Elle (56, 57) und Speiche (57, 56) jeweils eine drehbar gelagerte zweite Antriebswelle (08) verläuft und die Drehrichtungen der koaxial innerhalb von Elle (56, 57) und Speiche (57, 56) jeweils eine drehbar gelagerten zweiten Antriebswellen (08) gegensinnig sind.

11. Vorrichtung nach einem der Ansprüche 5 bis 10, wobei die das Parallelgestänge (55) bildenden Gestängeelemente (56, 57) des Unterarms (53) in Richtung der Erstreckung der Schwenkachse (51) des zugehörigen Oberarms (52) des jeweiligen Arms (50) zueinander beabstandet sind und die gelenkigen Verbindungen der beiden Gestängeelemente (56, 57) mit dem Oberarm (52) auf einer ersten, parallel zur Schwenkachse (51) des zugehörigen Oberarms (52) des jeweiligen Arms (50) verlaufenden Geraden liegen, sowie die gelenkigen Verbindungen der beiden Gestängeelemente (56, 57) mit dem Koppelelement (06) auf einer zweiten, parallel zur Schwenkachse (51) des zugehörigen Oberarms (52) des jeweiligen Arms (50) verlaufenden Geraden liegen.

12. Vorrichtung nach Anspruch 11, wobei mindestens zwei Unterarme (53) von Armen (50), deren Oberarme (52) um nicht parallel zueinander verlaufende Schwenkachsen (51) angetrieben gelagert sind, als Parallelgestänge (55) ausgeführt sind.

13. Vorrichtung nach einem der voranstehenden Ansprüche, wobei am Koppelelement (06) ein Manipulator vorgesehen ist, wobei wenigstens eine vermittels zumindest eines Antriebs (02) von der Basis (04) zum Koppelelement (06) übertragene Drehbewegung dazu dient, den am Koppelelement (06) vorgesehenen Manipulator zu betätigen.

14. Vorrichtung nach einem der voranstehenden Ansprüche, wobei zumindest ein erstes und/oder ein zweites und/oder ein drittes Übersetzungselement (23, 24, 25) ein Winkel- oder Kegelradgetriebe umfasst.

15. Vorrichtung nach einem der voranstehenden Ansprüche, wobei mindestens eine angetriebene Teleskopwelle zwischen Basis (04) und Koppelelement (06) vorgesehen ist, welche mit einem basisseitigen Teleskopwellenantrieb kardanisch gelenkig verbunden ist, und über mindestens ein Kreuz- oder Kardangelenk gelenkig drehbar am Koppelelement (06) gelagert ist, und welche wenigstens eine Drehbewegung vom Teleskopwellenantrieb an der Basis (04) zum Koppelelement (06) überträgt.
